Europäisches Patentamt

European Patent Office

Office européen des brevets

(19)

(11) Numéro de publication: **0 155 718**
**B1**

(12) **FASCICULE DE BREVET EUROPEEN**

(45) Date de publication du fascicule du brevet: **12.12.90**

(51) Int. Cl.⁵: **F 24 D 19/10**

(21) Numéro de dépôt: **85200246.8**

(22) Date de dépôt: **25.02.85**

(54) **Installation pour le maintien à température avec de l'air chaud, de locaux tels que des halles, hangars, bâtiments d'usine, etc.**

(30) Priorité: **02.03.84 BE 212500**

(43) Date de publication de la demande:
**25.09.85 Bulletin 85/39**

(45) Mention de la délivrance du brevet:
**12.12.90 Bulletin 90/50**

(84) Etats contractants désignés:
**DE FR GB NL**

(56) Documents cités:
**EP-A-0 048 016**
**DE-A-1 451 288**
**DE-A-1 946 354**
**DE-A-2 647 039**

(73) Titulaire: **"ACTA"**
**Middelweg 231**
**B-3030 Heverlee (BE)**

(72) Inventeur: **De Lepeleire, Jozef**
**Middelweg 231**
**B-3030 Heverlee (BE)**

(74) Mandataire: **Pieraerts, Jacques et al**
**Bureau Gevers S.A. rue de Livourne 7 bte 1**
**B-1050 Bruxelles (BE)**

Courier Press, Leamington Spa, England.

**Description**

La présente invention est relative à une installation pour le maintien à température avec de l'air chaud, de locaux tels que des halles, salles, hangars, bâtiments d'usine, etc., cette installation étant notamment constituée par une unité de chauffage équipée d'un ventilateur qui refoule l'air réchauffé vers le local à travers un canal d'alimentation vers une série d'ajutages, un thermostat de canal monté entre cette unité de chauffage et lesdits ajutages, un thermostat d'ambiance qui est placé dans le local à chauffer et agit sur la quantité de calories à fournir par ladite unité de chauffage, tout ceci de telle sorte que les corrections de température requises dans le local à chauffer résultent de l'interaction des deux thermostats.

Quels que puissent être les moyens utilisés et les sources de chaleur auxquelles ont fait appel, il existe toujours dans de grands locaux, tels que des halles de fabriques, des entrepôts, des bâtiments publics couverts, une stratification de température, par laquelle on entend que les couches d'air plus chaudes, donc plus légères, vont remplir les zones situées plus haut des locaux précités, tandis que l'air plus froid remplira les zones situées plus bas. La température augmente depuis le plancher jusqu'au toit ou plafond du local concerné, ce qui entraîne des différences de température très perturbatrices. Ces différences de température peuvent prendre des valeurs assez grandes et peuvent par exemple atteindre de 10 à 20°C et plus.

Une telle condition de "stratification de température" a alors aussi pour résultat une consommation d'énergie inadmissiblement élevée. L'air chaud s'échappe au sommet par toute fente ou ouverture dans ou sous le toit.

Même si l'on arrive à réaliser une construction de toiture complètement étanche à l'air, ce qui n'est pas toujours possible ni nécessairement est désirable, les pertes de chaleur par convection restent alors anormalement élevées. Une stratification de température provoque également des phénomènes d'humidité perturbateurs dans la zone de séjour proche du plancher.

Le brevet européen 0 048 016 s'attaque au même problème de la correction du phénomène du stratification dans un local chauffé mais, en réalité, les moyens mis en oeuvre pour atteindre ces résultats sont complexes et des différences de principe essentielles peuvent être remarquées. C'est ainsi notamment que, selon ce document, l'air est diffusé horizontalement dans la zone dite "de toiture" et cela en régime de chauffage par des diffuseurs d'air dans le but d'éviter des courants d'air. Les diffuseurs d'air sont montés dans la partie supérieure du local et les ouvertures de reprise vers le bas sont situées à proximité du sol, cette dernière ouverture de reprise ne devenant des ouvertures de pulsion qu'en régime d'été et sans chauffage.

Toujours selon ce document, le réchauffement du local est réalisé à l'aide d'au moins une unité de chauffage, tandis que l'unité de chauffage de l'air ne sert qu'à tempérer l'air extérieur froid pulser en le réchauffant jusqu'à une température en dessous de la température du local. Une telle unité de chauffage ne fournit qu'une partie de la chaleur nécessaire pour compenser les pertes de ventilation, tandis que le rôle essentiel de l'unité de chauffage local est de fournir la chaleur nécessaire, non seulement pour compenser les pertes par transmission mais, en plus, au moins une partie des pertes de ventilation.

De plus, on constatera que le document EP—A—0 048 016 a essentiellement pour objet une installation de ventilation, en complément une installation de chauffage.

La présente demande a essentiellement pour objet une installation de chauffage qui peut être parfaitement conçue sans ventilation.

Comme on le constatera, l'invention a essentiellement pour but d'offrir une solution pratique permettant de s'opposer au phénomène de stratification de température en faisant appel à des moyens techniques auxiliaires qui rendent possible une commande fiable de l'installation dans toutes les circonstances qui peuvent se produire.

Pour réaliser cet objectif conformément à l'invention, dans l'installation selon la présente demande, les ajutages précités sont dirigés vers le bas afin de chasser l'air vers le base, le thermostat de canal agit sur un servomoteur afin d'influencer les variations de débits désirées du ventilateur, et les corrections de température requises dans le local à chauffer résultent de l'accord mutuel de la vitesse de soufflage et de la température de l'air soufflé.

Suivant une forme de réalisation possible, au moins un mais de préférence plusieurs ajutages dirigés horizontalement sont prévus sur un réseau de canaux distinct.

Ledit thermostat de canal agit dans ce cas sur un système de vannes pour régler ainsi le débit de l'air dans le canal d'alimentation avec des ajutages dirigés vers le bas, tandis que le débit d'air total dudit ventilateur reste pratiquement constant et le réseau de canaux avec des ajutages dirigés horizontalement reprend le reste du débit d'air.

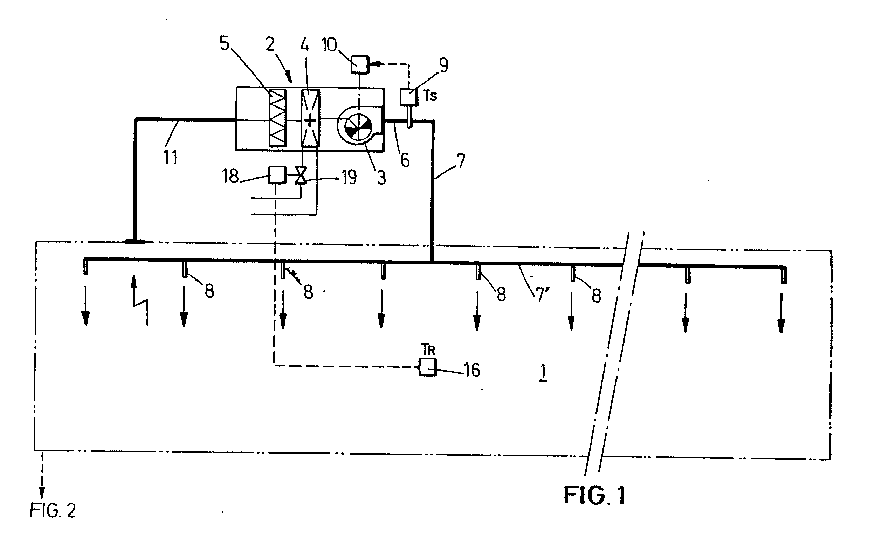

D'autres détails et particularités de l'invention ressortiront de la description ci-après, donnée à titre d'exemple non limitatif et en se référant aux dessins annexés, dans lesquels: Les figures 1 à 4 sont des représentations schématiques de quatre formes de réalisation possibles de l'installation suivant l'invention.

Dans ces figures, le local à maintenir à température est désigné par la référence générale 1. L'unité de chauffage qui peut être de n'importe quel type, est désignée dans les quatre représentations schématiques par la référence 2. En principe, une unité de chauffage comprend au moins un ventilateur 3, un échangeur de chaleur 4 et un filtre à air 5. La conduite de sortie 6 se poursuit, dans chacune des formes de réalisation, par au moins un canal d'alimentation 7, dont la partie s'étendant horizontalement 7' est dotée d'ajutages 8 dirigés vers le bas.

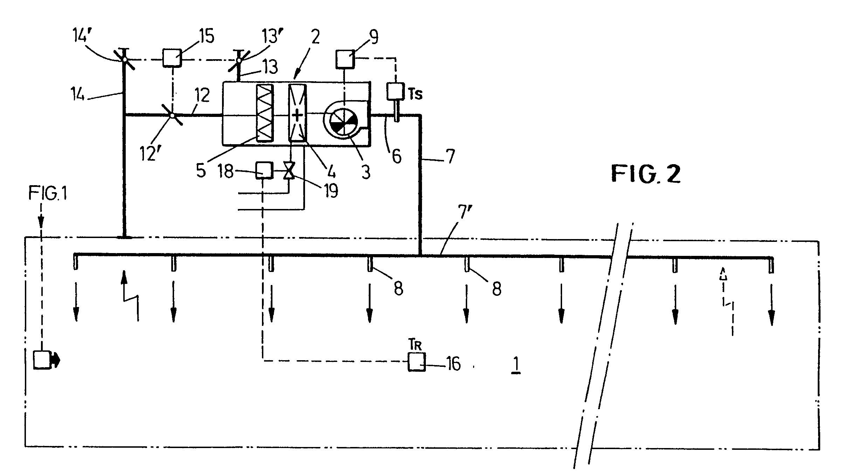

L'admission pour l'air à réchauffer peut être simple. Une telle admission est indiquée par la référence 11, mais plusieurs conduites d'admission sont naturellement possibles, comme il ressortia ci-après de la description des formes de réalisation suivant les figures 2 à 4.

L'installation suivant l'invention est illustrée dans sa forme de réalisation la plus simple aux figures 1 et 2.

Comme il ressort des figures 1 à 4, les ajutages 8 montés sur la partie 7' du canal d'alimentation 7 sont tous dirigés vers le bas, tandis que la partie 7' du canal d'alimentation est disposée dans la partie supérieure du local 1. La hauteur à laquelle cette partie du canal d'alimentation est agencée, dépend naturellement de la structure et des possibilités locales du local 1 à chauffer.

Entre le canal d'alimentation 7 et l'unité de chauffage 2 est monté un thermostat de canal 9, qui agit sur le débit de l'air dans le canal 7. On peut agir sur ce débit en modifiant aussi bien la vitesse de rotation du ventilateur 3 que la position de vannes de réglage.

Le thermostat 9 agit sur un servomoteur 10 (figures 1 et 2) afin d'influencer les variations de débit désirées du ventilateur 3. Ce thermostat est également un élément essentiel dans la forme de réalisation suivant les figures 3 et 4.

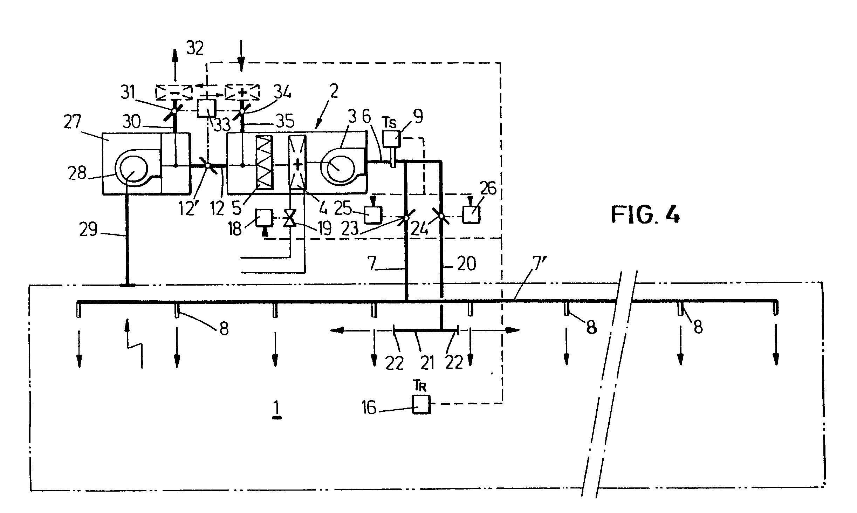

L'admission d'air vers l'unité de chauffage 2 a lieu par l'intermédiaire d'une conduite 11 (figure 1). Dans la forme de réalisation suivant les figures 2 et 4, l'admission d'air a lieu soit par une conduite 12 (avec une vanne 12') (figures 2, 3 et 4), dans le cas où l'on travaille en circuit fermé, soit par une conduite 13 lorsqu'on fait directement appel à l'air extérieur (admission d'air par l'intermédiaire de la conduite 13 avec vanne 13').

La conduite 12 peut encore présenter une dérivation 14 (avec vanne 14'), par laquelle une partie de l'air peut s'échapper vers l'extérieur. Un servomoteur 15 agit sur les vannes 12', 13' et 14'. Ce moteur 15 est commandé pa un commutateur S, mais il peut éventuellement aussi être commandé automatiquement.

Dans le local à chauffer 1 est prévu un thermostat de local 16, qui agit sur un servomoteur 18 qui influence la position de soupapes de réglage 19 (figure 1—4) et ainsi la quantité de chaleur transmise à l'air.

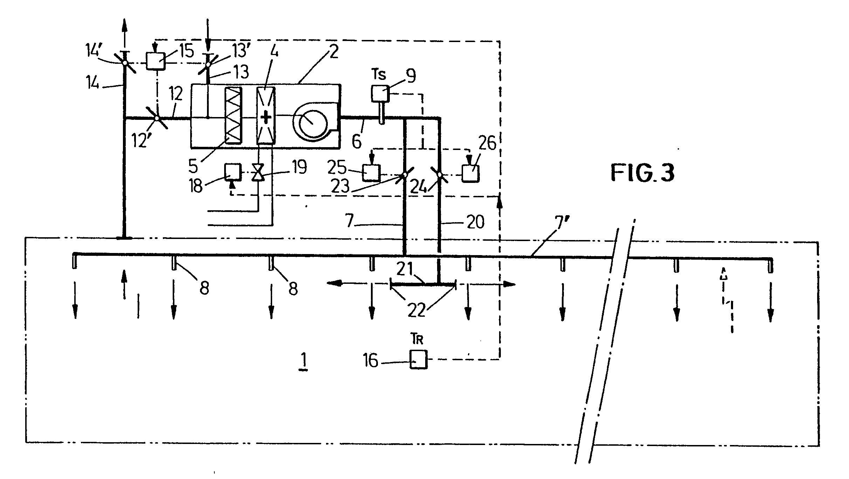

En principe, l'installation aussi bien dans les formes de réalisation suivant les figures 1 et 2 que dans celles suivant les figures 3 et 4, travaille comme suit:

Avec une demande croissante au thermostat de local 16, le servomoteur 18 augmentera, en ouvrant la soupape 19, l'alimentation en fluide chaud (air, eau ou vapeur) vers l'échangeur de chaleur. Le ventilateur 3 refoule l'air aspiré à partir de la conduite 11, éventuellement les conduites 12 et 13, vers le canal d'alimentation 7—7' d'où il est dirigé vers le bas par les ajutages 8.

Dans les formes de réalisation suivant les figures 3 et 4, le canal d'alimentation 7 est dédoublé par une dérivation 20 qui se poursuit par un canal 21 avec un ou plusieurs ajutages 22 dirigés horizontalement.

Sur le canal d'alimentation 7 et sa dérivation 20 sont montées des vannes 23 et 24 qui sont commandées par des servomoteurs 25 et 26 qui sont à leur tour commandés par le thermostat de canal 9.

L'unité de chauffage 2 dans la forme de réalisation suivant la figure 4, est précédée par une unité de circulation d'air 27 avec ventilateur 28. L'aspiration de l'air par ce ventilateur a lieu à partir du local 1 par une conduite 29, tandis que le retour de cet air peut avoir lieu soit par la conduite 12, vers l'unité de chauffage 2, soit par la conduite 30 et une vanne 31, vers une unité de récupération de chaleur 32. Un moteur 33 éventuellement commandé à partir du thermostat de local 16, commande les vannes 31 sur la conduite 30 et 34 sur la conduite 35. Cette dernière conduite relie l'unité de récupération de chaleur 32 à l'unité de chauffage 2.

On peut donc déduire de la description ci-avant des éléments matériels dont est composée l'installation suivant l'invention, que la température de l'air soufflé dans le local 1 et sa vitesse de soufflage doivent toujours être accordées mutuellement de telle sorte que les jets d'air dirigés à partir des ajutages 8 vers le bas doivent toujours pouvoir pénétrer jusqu'au plancer ou approximativement jusqu'à cette hateur du local 1, sans danger de provoquer des apparitions d'himidité perturbatrices ou des vitesses résiduelles trop élevées pour l'air.

Le thermostat de local ou d'ambiance 16 agit sur le dispositif ou les moyens de chauffage de l'air soufflé ou incident, tandis que le thermostat de canal 9 agit, dans chacune des formes de réalisation, sur le débit du canal 7.

Comme déjà mentionné ci-avant, lors d'une augmentation de la demande par le thermostat de local 16, on agira sur le dispositif de chauffage, c'est-à-dire en fait sur une augmentation de la quantité de chaleur fournie par l'unité de chauffage 2. Un résultat immédiat en est un accroissement de l'air soufflé dans le local 1. Lors d'une déterminaton de l'augmentation de la température de l'air refoulé par l'unité de chauffage, le thermostat 9 agira à son tour sur le débit de l'air chaud dirigé vers le bas à partir des ajutages 8, soit dans les formes de réalisation suivant les figures 1 et 2 en agissant sur le débit du ventilateur 3, soit dans les formes de réalisation suivant les figures 3 et 4 en agissant sur les vannes 25 et 26, qui sont également responsables d'une modification du débit de l'air réchauffé dans le canal d'alimentation 7 et la conduite 7', ou la dérivation 20.

Il ressort donc de la description donnée ci-avant de l'installation suivant l'invention, que la caractéristique principale de l'invention doit être considérée dans l'action combinée du thermostat d'ambiance 16 et du thermostat de canal 9 qui agissent, d'une part, sur le débit de calories fournies par l'unité de chauffage 2 et, d'autre part, sur la dynamique et donc sur le volume de l'air soufflé dans le local à chauffer. Ainsi le thermostat de local 16 réagira en fait dans le sens d'une élévation de la température de l'échangeur de chaleur 4. Lors d'une détermination d'une augmentation de la température de l'air fourni par l'unité de chauffage 2, le thermostat de canal 9 réagit soit en agissant directement sur le débit du ventilateur 3 (forme de réalisation suivant les figures 1 et 2), soit en agissant sur les vannes 23 et 24, ce qui augmente également le débit vers les ajutages 8 et 22.

Grâce aux jets d'air chassés par ces ajutages verticalement vers le bas et latéralement horizontalement, il se produit un mouvement intense et régulier de l'air ambiant, de telle sorte que tous les phénomènes de stratification seront nettement limités ou presque éliminés.

D'importants avantages spécifiques de ce système, en dehors de la bonne répartition de chaleur et d'un faible gradient de température inférieur à 0,5°C par mètre, sont notamment les suivants:

L'installation peut travailler aussi bien avec de l'air de récupération qu'avec de l'air extérieur, et peut donc être réglée entre 0 et 100%. De ce fiat, en plus de la fonction de chauffage, une ventilation est aussi possible et on peut s'attendre à une limitation du degré d'humidité.

Les locaux chauffés peuvent être mis partiellement sous surpression, de telle sorte que les pertes de ventilation peuvent être mieux contrôlées et que de l'humidité froide pénétrant par des fentes ou ouvertures, surtout à hauteur du plancher, peut être maîtrisée.

La chaleur est mieux répartie et peut être dirigée vers les endroits les plus perturbateurs, tels que des portes cochères et de grandes ouvertures de porte, un rideau d'air chaud pouvant alors être formé à l'aide de jets d'air concentrés. La pénétration normale d'air extérieur froid lors de l'ouverture de portes est alors limitée de manière perceptible.

Les points positifs et avantages précités ont finalement pour résultat un fonctionnement plus efficace de l'ensemble de l'installation, de telle sorte que l'on obtient un confort thermique accru et une consommation d'énergie réduite.

## Revendications

1. Installation pour le maintien à température avec de l'air chaud, de locaux tels que des halles, salles, hangars, bâtiments d'usine, etc., cette installation étant notamment constituée par une unité de chauffage (2) équipée d'un ventilateur (3) qui refoule l'air réchauffé vers le local à travers un canal d'alimentation (7) vers une série d'ajutages (8), un thermostat de canal (9) monté entre cette unité de chauffage (2) et lesdits ajutages (8), un thermostat d'ambiance (16) qui est placé dans le local à chauffer et agit sur la quantité de calories à fournir par ladite unité de chauffage (2), tout ceci de telle sorte que les corrections de température requises dans le local à chauffer résultent de l'interaction des deux thermostats, caractérisée en ce que les ajutages sont dirigés vers le bas afin de chasser l'air vers le bas, en ce que le thermostat de canal (9) agit sur un servomoteur (10) afin d'influencer les variations de débits désirées du ventilateur, et en ce que les corrections de température requises dans le local à chauffer résultent de l'accord mutuel de la vitesse de soufflage et de la température de l'air soufflé.

2. Installation suivant la revendication 1, caractérisée en ce qu'en plus des ajutages (8) qui chassent les jets d'air dirigés vers le bas, elle est munie d'au moins un mais de préférence plusieurs ajutages horizontaux (22).

3. Installation suivant l'uné ou l'autre des revendications 1 et 2, caractériséee en ce que ledit thermostat de canal (9) est monté sur le canal d'alimentation (7), qui relie ladite unité de chauffage (2) à une conduite (7') sur laquelle sont branchés lesdits ajutages (8).

4. Installation suivant l'une quelconque des revendications 1 à 3, caractériséee en ce que ledit thermostat d'ambiance (16) agit sur une servomoteur (8), qui influence à son tour la fourniture de fluide chaud vers l'échangeur de chaleur (4) de l'unité de chauffage.

5. Installation suivant l'une quelconque des revendications 1 à 4, caractériséee en ce que ledit thermostat d'ambiance (16) agit sur un servomoteur (15), qui agit sur l'arrivée de l'air à réchauffer vers l'unité de chauffage.

6. Installation suivant l'une quelconque de revendications 1 à 5, caractérisée en ce que ladite unité de chauffage (2) est encore précédée par une unité de circulation d'air (27) avec ventilateur (28).

7. Installation suivant la revendication 6, caractérisée en qu'entre ladite unité de chauffage (2) et l'unité de circulation d'air (27) est interposée une unité de récupération de chaleur (32).

8. Installation suivant la revendication 7, caractérisée en ce que ladite unité de récupération de chaleur est mise en liaison par des conduites (30, 35) avec ladite unité de circulation d'air (27) et ladite unité de chauffage (2), un servomoteur (33) commandé par le thermostat d'ambiance (16) influençant des vannes (31, 34) montées sur lesdites conduites.

## Patentansprüche

1. Anlage zur Temperaturhaltung von Liegenschaften, wie Hallen, Säle, Hangare, Fabrikgebäude usw. mit Hilfe von warmer Luft, wobei die Anlage namentlich von einer Heizeinheit (2) gebildet ist, die mit einem Gebläse (3) versehen ist, das die rückgewärmte Luft gegen die Liegenschaft durch einen Zuführkanal (7) gegen eine Reihe von Anschlußstutzen (8) bläst, wobei ein Kanalthermostat (9) zwischen dieser Heizeinheit (2) und den genannten Anschlußstutzen (8) vorhanden ist, ein Umgebungsthermostat (16) in der zu erwärmenden Liegenschaft angeordnet ist und auf die von der Heizeinheit (2) zu liefernde Wärmemenge derart einwirkt, daß die in der zu erwärmenden Liegenschaft erforderlichen Temperaturkorrekturen zu einer Wechselwirkung der zwei Thermostate führen, dadurch gekennzeichnet, daß die Anschlußstutzen nach unten gerichtet sind, um die Luft nach unten zu blasen, und daß der Kanalthermostat (9) auf einen Servomotor (10) einwirkt, um die erforderlichen Änderungen der Abgabe des Gebläses zu beeinflussen, und daß die in der erwärmenden Liegenschaft erforderlichen Temperaturkorrekturen aus der gegenseitigen Abstimmung der Blasgeschwindigkeit und der Temperatur der geblasenen Luft resultieren.

2. Anlage nach Anspruch 1, dadurch gekennzeichnet, daß zusätzlich zu den Anschlußstutzen (8), die die nach unten gerichteten Luftstrahlen abgeben, sie mit wenigstens einem, jedoch vorzugsweise mehreren horizontalen Anschlußstutzen (22) versehen ist.

3. Anlage nach einem der Ansprüche 1 und 2, dadurch gekennzeichnet, daß der Kanalthermostat (9) an dem Zuführkanal (7) befestigt ist, der die Hiezeinheit (2) mit einer Leitung (7') verbindet, von der die genannten Anschlußstutzen (8) abzweigen.

4. Anlage nach einem der Ansprüche 1 bis 3, dadurch gekennzeichnet, daß der Umgebungsthermostat (16) auf einen Servomotor (8) einwirkt, der seinerseits die Abgabe eines warmen Fluids an einen Wärmetauscher (4) der Heizeinheit beeinflußt.

5. Anlage nach einem der Ansprüche 1 bis 4, dadurch gekennzeichnet, daß der genannte Umgebungsthermostat (16) auf einen Servomotor (15) einwirkt, der auf den Zulauf der rückzuheizenden Luft zur Heizeinheit einwirkt.

6. Anlage nach einem der Ansprüche 1 bis 5, dadurch gekennzeichnet, daß der genannten Heizeinheit (2) eine mit einem Gebläse (28) versehene Luftumwälzeinheit (27) vorgeschaltet ist.

7. Anlage nach Anspruch 6, dadurch gekennzeichnet, daß zwischen der Heizeinheit (2) und der Luftumwälzeinheit (27) eine Wärmerückgewinnungseinheit (32) angeordnet ist.

8. Anlage nach Anspruch 7, dadurch gekennzeichnet, daß die Wärmerückgewinnungseinheit mittels Leitungen (30, 35) mit der Luftumwälzeinheit (27) und der Heizeinheit (2) verbunden ist, wobei ein von dem Umgebungsthermostat (16) gesteuerter Servomotor (33) Ventilklappen (32, 34) beeinflußt, die in den genannten Leitungen angeordnet sind.

**Claims**

1. An installation for maintaining the temperature, by means of hot air, of premises such a halls, rooms, hangars, factory buildings etc., this installation comprising, in particular, a heating unit (2) equipped with a fan (3) which forces the heated air towards the premises through a supply channel (7) towards a series of nozzles (8), a channel thermostat (9) mounted between this heating unit (2) and the said nozzles (8), a room thermostat (16) which is situated in the premises to be heated and acts on the number of calories to be supplied by the said heating unit (2), all this in such a way that the temperature corrections required in the premises to be heated result from the interaction of the two thermostats, characterized in that the nozzles are directed downwards in order to drive the air downwards, in that the channel thermostat (9) acts on a servomotor (10) in order to influence the variations in delivery required from the fan, and in that the temperature corrections required in the premises to be heated are otbained by the joint action of the blowing speed and the temperature of the air blown in .

2. An installation according to Claim 1, characterized in that in addition to the nozzles (8) which drive the jets of air which are directed downwards, it is equipped with at least one and preferably a plurality of horizontal nozzles (22).

3. An installation according to one or other of Claims 1 and 2, characterized in that the said channel thermostat (9) is mounted on the supply channel (7) which connects the said heating unit (2) to a duct (7') to which the said nozzles (8) are connected.

4. An installation according to any one of Claims 1 to 3, characterized in that the said room thermostat (16) acts on a servomotor (18) which in its turn influences the supply of hot fluid to the heat exchanger (4) of the heating unit.

5. An installation according to any one of Claims 1 to 4, characterized in that the said room thermostat (16) acts on a servomotor (15) which acts on the access of air to be heated to the heating unit.

6. An installation according to any one of Claims 1 to 5, characterized in that the said heating unit (2) is also preceded by an air circulation unit (27) comprising a fan (28).

7. An installation according to Claim 6, characterized in that a heat recovery unit (32) is interposed between the said heating unit (2) and the air circulation unit (27).

8. An installation according to Claim 7, characterized in that the said heat recovery unit is connected by ducts (30, 35) to the said air circulation unit (27) and the said heating unit (2), a servomotor (33) controlled by the room thermostat (16) influencing valves (31, 34) mounted in the said ducts.

FIG. 2

FIG. 1

EP 0 155 718 B1

FIG. 2

FIG.3

FIG. 4

EP 0 155 718 B1